Europäisches Patentamt

European Patent Office

Office européen des brevets

(19)

(11) Publication number: **0 382 552**
**A2**

# (12) EUROPEAN PATENT APPLICATION

(21) Application number: **90301378.7**

(51) Int. Cl.⁵: **B60R 21/26**

(22) Date of filing: **09.02.90**

(30) Priority: **10.02.89 US 310122**
**22.09.89 US 409456**

(43) Date of publication of application:
**16.08.90 Bulletin 90/33**

(84) Designated Contracting States:
**AT BE CH DE DK ES FR GB GR IT LI LU NL SE**

(71) Applicant: **MORTON INTERNATIONAL, INC.**
**110 North Wacker Drive**
**Chicago Illinois 60606(US)**

(72) Inventor: **Lauritzen, Donald R.**
**948 W. 3rd N.**
**Hyrum, Utah 84319(US)**
Inventor: **Ward, Mihacel J.**
**3809 Chilson Road**
**Howell, Michigan 4843(US)**

(74) Representative: **Bankes, Stephen Charles**
**Digby et al**
**BARON & WARREN 18 South End Kensington**
**London W8 5BU(GB)**

(54) **Dual chamber gas bag inflator.**

(57) A dual chamber gas generator (10) for inflating a vehicle inflatable restraint cushion comprises a housing made from a single extruded piece which includes a tubular portion (14) and a bulkhead (16) which is integral with the tubular portion and which separates two combustion chambers (18,20) containing first and second gas generation charges (74). The extruded housing is provided to eliminate the possibility of hot gases blowing by the bulkhead from the first charge and accidentally igniting the second charge prematurely, to reduce manufacturing cost, and to offer flexible inflator performance output which is tailorable to the specific needs of the automobile at the time of a crash while providing a slower onset of air bag inflation for avoiding injuries to small children and out-of-position occupants and still rapidly achieving full inflation.

EP 0 382 552 A2

# DUAL CHAMBER GAS BAG INFLATOR

The present invention relates to gas generators for inflating vehicle inflatable restraint cushions, commonly known as air bags or gas bags, so as to provide impact protection to occupants of the vehicles.

The gas bag is located forward of the occupants in a deflated condition but, in the event of a crash, is inflated in a matter of a few milliseconds by a gas produced by the burning of a gas generant material in an inflator. The gas generant is ignited by an igniter, and the combustion gases resulting from rapid burning of the gas generant rush into the bag for a rapid rate of inflation thereof. While such a system performs generally satisfactorily, the rapid rate of inflation results during the 0 to 20 millisecond time interval after inflator initiation in a sudden impact of the bag upon small children, who may be out of position, and other vehicle occupants.

In order to provide a less sudden and softer action of the bag upon the occupant so as to reduce the chance of possible injury to the occupant because of bag deployment, it is desired that the initial inflation of the bag be more gradual but with the same or only a slightly longer time required for total inflation. This problem is more apparent on the passenger side where there is a greater likelihood of small children being present.

Attempts to solve this problem have included disposing two driver side inflators side by side to deploy into the single passenger side gas bag, specifically, driver side inflators such as shown in U.S. Patent No. 4,547,342 to Adams et al. and assigned to the assignee of the present inventions the disclosure of which patent is incorporated herein by reference. The ignition for these inflators is timed so that the igniter for one is fired first followed after a predetermined time by firing of the other. There is difficulty with this approach in providing sufficient volume for adequate gas generant.

Another attempted solution to this problem uses an igniter which causes the propellant or gas generant in the inflator to ignite in a progressive manner so as to inflate the bag slowly at the onset but more rapidly later as inflation progresses, such as described in U.S. Patent No. 4,358,998 to Schneiter et al. and assigned to the assignee of the present invention. The igniter has a disc delay between two portions thereof whereby the gas generant material around one portion is ignited immediately and then after a delay, the gas generant material around the other portion is ignited.

While the initial pressure rise may be softened by the selection of the composition or configuration of gas generant material, such as the use of wafers of gas generant material rather than pellets, this approach does not allow tailoring of performance to the particular conditions of a crash.

It has also been suggested to provide a consumable partition in an inflator to divide it into two chambers each containing gas generant material and ignitable by a separate igniter. Such a gas generator is disclosed in U.S. Patent No. 3,972,545 to Kirchoff et al. and assigned to the assignee of the present invention. An impact sensor determines whether one or both of the igniters is fired on impact, depending upon the force of a collision, and hence, the rate at which the gas bag is filled with gas. If the impact is less severe, only the downstream igniter will be fired. In this case, combustion proceeds upstream through the consumable partition to ignite the igniter and the gas generant in the upstream chamber to provide a slower rate of inflation for a softer cushioning effect but with the same quantity of gas.

In U.S. Patent No. 3,663,035 to Norton an inflator comprising gas generating charges in a multi-stage arrangement is disclosed. Each stage, in a separate housing, is mounted at one end of a block containing an ignition cavity that is common to both stages. A fixed delay line separates one of the stages from the ignition cavity and delays ignition of that stage by a few milliseconds. This structure is said to facilitate a more controlled delivery of gas to a crash bag. It does not, however, allow tailoring of performance to the particular conditions of a crash because the delay line if fixed.

While the above-proposed solutions have served to advance the state-of-the-art, these solutions do not offer the amount or degree of flexibility in inflator performance output which is desired whereby the inflator may be tailored to the specific needs of an automobile or other vehicle at the time of a crash. It is also desirable to provide a rugged dual chamber inflator which offers such flexibility and which is economical to manufacture.

A difficulty with a passenger side inflator which has dual chambers with a bulkhead therebetween is the possibility of hot gases blowing by the bulkhead and inadvertently igniting the gas generant in the second chamber prematurely.

Thus, there is a need and a demand for improvement in vehicle passenger side inflators to enable the attainment of inflator performance that is tailored to the specific needs of the vehicle and the passengers at the time of a crash, and in particular, to improvement in passenger side inflators of the dual chamber end-to-end type contained in the same housing to the end that there is obtained, economically, total isolation of the two chambers, precluding the possibility of hot gases from one of the other inflator therein. The present invention was devised to fill the technological gaps that have existed in the art in these regards.

It is therefore an object of the present invention to provide an improved dual chamber gas generator which is economical to produce and which provides a slow initial pressure rise followed quickly by full deployment.

It is another object of the present invention to provide such a dual chamber gas generator wherein the performance output is tailorable to the specific needs of the vehicle at the time of a crash.

It is still another object of the present invention to isolate each of the dual chambers to prevent hot gases blowing by the bulkhead separating the chambers and inadvertently igniting the gas generant in the second chamber prematurely.

It is a further object of the invention to provide in such a dual chamber gas generator, wherein the housing thereof is made of aluminum, an auto ignition device in association with each of the dual chambers to restrict the internal pressure that is allowed to build up in the generator, upon exposure thereof to a high temperature environment such as a bonfire, to a range within the internal pressure capability of the housing.

It is still another object of the invention to provide an improved vehicle occupant restraint system for providing a controlled delivery of gas to an air bag in accordance with the speed of the vehicle and the ambient temperature at the time of a crash.

In order to achieve the above objects, there is provided in accordance with the present invention a dual chamber gas generator wherein the housing is extruded to provide a tubular portion and an integral imperforate bulkhead chamber separating portion wherein the tubular portion of the housing may be manufactured oversize so that it may be cut to the specific length desired for each chamber for each specific application. The internal inflator components in both chambers may be similar but the chambers may be of unequal length better to match the desired performance in respect of the controlled delivery of gas to the air bag. Each chamber is arranged to be ignited independently. To that end a separate initiator or squib may be employed for each chamber, each squib being provided with electrical energy from the vehicle responsively to a crash sensing means. The microprocessor now commonly found in vehicles may be employed in cooperation with the crash sensing means to determine the correct time delay between the firing of each squib as required to compensate for vehicle speed and ambient temperature and other factors bearing on the desired inflator performance output.

Preferred embodiments of this invention will now be described with reference to the accompanying drawings wherein:

Figs 1 is a side view, partly in section, of a gas generator which embodies the present invention;

Fig. 2 is a side view of the housing for the gas generator of Fig. 1;

Fig. 3 is an end view of the housing for the gas generator of Fig. 1;

Fig. 4 is a graph illustrating a comparison of the inflation rates for a typical single chamber passenger inflator and an inflator according to the present invention;

Fig. 5 is a schematic diagram illustrating the independent control of ignition in each chamber of the inflator of Fig. 1 responsively to a crash and in addition to other parameters such as vehicle speed and temperature at the time of the crash, for determining the correct, that is, the optimum, time delay between the firing of the chambers;

Figs. 6, 7 and 8 are graphs illustrating the performance of the dual pulse passenger inflator of an embodiment according to the invention with time delays between the firing of the chambers of 10, 15 and 20 milliseconds.

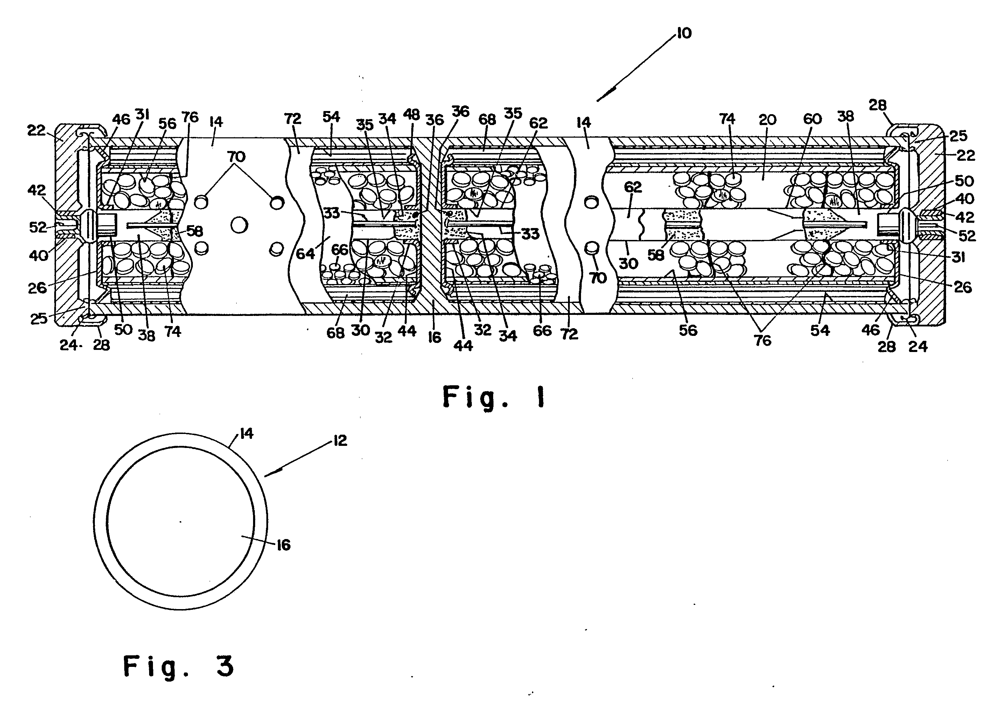

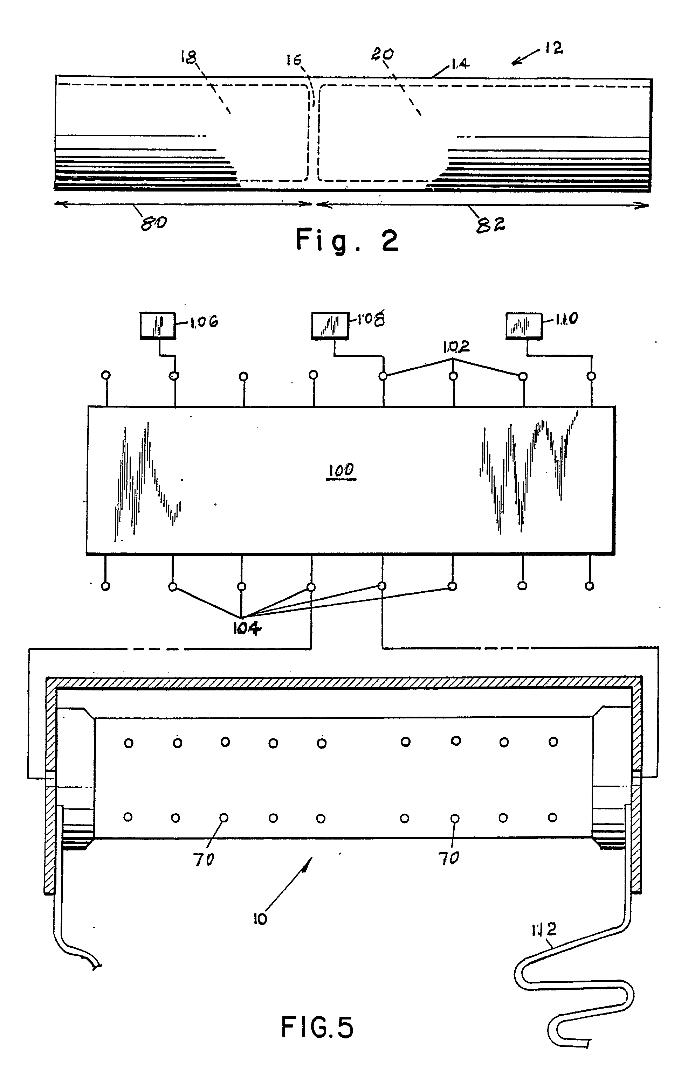

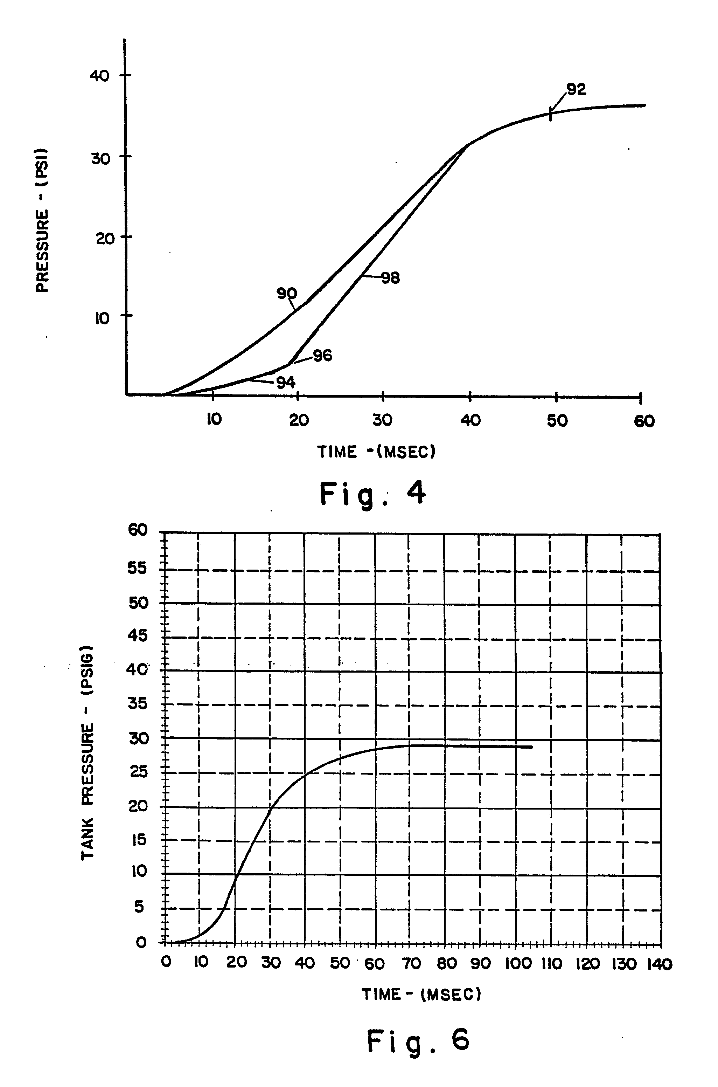

Referring to Fig. 1, there is shown generally at 10 a gas generator for inflating a vehicle inflatable restraint cushion for the passenger side of a vehicle. However, the present invention is not meant to be limited to inflators for the passenger sides of vehicles but may also include inflators where appropriate for the driver side. The inflator 10 may have an overall length of perhaps 11.82 inches and an overall diameter of perhaps 2.73 inches to provide sufficient volume for adequate gas generant. As more clearly shown in Figs. 2 and 3, the inflator 10 includes a housing 12 having a first left end and a second or right end, and which includes a generally tubular elongate portion 14 having a wall that may be cylindrical and a bulkhead portion 16 extending radially of the tubular portion 14 to divide the housing into two chambers 18 and 20. The housing will be described in greater detail hereinafter.

Each end of the housing 12 is closed by an end plate or base member 22 which is sealingly attached thereto by a suitable process such as by inertia welding, as illustrated by welds 24, which process is described in the aforesaid U.S. Patent No. 4,547,342 to Adams et al. Along the periphery of its inner surface, each end plate 22 has a raised circular ridge 25 which is welded to the respective end of the housing 12 during this process. In accordance with the inertial welding process, the inflator 10 is welded in the wholly loaded condition. During the inertia welding operation, the assembly in each of the respective chambers 18 and 20 is held stationary in an inertial welding machine. A spring loaded retainer disk or member 26, composed of aluminum coated carbon steel or other suitable material, is positioned across the chamber opening to hold the gas generant material and other material in the chamber to be described hereinafter in place and to keep them separated from the end plate 22 which will be spinning during the inertia welding process. In the inertia welding process, the end plate 22 is rotated beneath the loaded housing 12 by power driven clutch means (not shown) to a speed typically of about 3000 r.p.m. Upon the attainment of such speed, the clutch is actuated to disconnect the power source and the freely spinning end plate 22 is raised upward to bring the circular ridge 25 of the end plate 22 and the respective end of housing 12 into contact. The resulting friction stops the spinning in a fraction of a second of the end plate 22 but raises the temperature at the areas of contact sufficiently to cause consolidation thereat of the metal of the end plate 22 and housing 12. Pressure is maintained for a short period, for example, a second or two, to allow the welds 24 to solidify. The welds 24 may also be utilized to retain the aluminum retaining disk 26 in place. A protective portion 28 extends from each end plate or base member 22 to surroundingly enclose the welds 24 and is spaced slightly from the housing 12.

With the exception of their lengths, the chambers 18 and 20 are identical. Therefore, the construction of chamber 18 will be described, it being understood that the construction of chamber 20 is similar.

Extending generally over the length of the chamber 18 and centrally located so as to be generally concentric with the tubular portion 14 is an elongate generally cylindrical member 30, composed of steel or other suitable material, which functions as an igniter tube.

Centrally of the retaining disk or member 26 is a flanged portion 31 which extends inwardly to define an opening or cup therein to receive and locate the outer end portion of the igniter tube 30. The other end portion of the igniter tube 30 is received and located in a similar flanged portion 32 which is positioned centrally of a locater cap or plate member 44, composed of aluminum coated carbon steel or other suitable material, which is adjacent the bulkhead 16.

A hivelite or other suitable fuse 33 extends centrally of the igniter tube 30 over substantially the length thereof. A retaining clip 34, which is secured in position in the igniter tube 30 by a crimp 35 and which is composed of carbon steel or other suitable material, engages the circumference of the inner end portion, i.e., end portion next to the bulkhead 16, of the fuse 33 to hold it in position.

The clip 34, the flange portion 32, and the bulkhead 16 in combination define a container into which the fuse 33 extends. This container contains auto ignition granules 36 to define an auto ignition device similar to the auto ignition device described in U.S. Patent No. 4,561,675 to Adams et al. and assigned to the assignee of the present invention, the disclosure of which patent is hereby incorporated herein by reference. The granules 36 are ignitable to cause the pyrotechnic charges in chamber 18 and 20 in the inflator 10 to function when the device is subjected to a high temperature environment, such as a bonfire, at a temperature in the 350° F. range instead of the 650° F. range which would cause the pyrotechnics to ignite if there were no auto ignition device. This enables the use of aluminum for the inflator housing 12, the aluminum having sufficient high temperature properties to contain the internal auto ignition pressures at 350° F. but not at 650° F. The housing 12 is composed preferably of aluminum in order to minimize weight.

The outer end portion (next to end plate 22) of the fuse 33 is held in position by retaining clip 38, which is slightly coned and press fit within the igniter tube 30. The fuse 33 extends outwardly beyond the retaining clip 38 toward the end plate 22.

Pressed into an aperture 40 in the outer surface of the end plate 22 is a suitable plastic shorting clip 42 which includes a suitable retaining spring (not shown). For example, the shorting clip 42 may be similar to that disclosed in U.S. Patent No. 4,369,707 to Budde, which disclosure is incorporated herein by reference. Secured within the clip 42 and extending into the igniter tube 30 next to the outer end of the fuse 33 for ignition thereof is an initiator assembly including a suitable squib 50 commonly known to those of ordinary skill in the art to which this invention pertains. The squib 50 is connected by a pair of terminals, one of which is shown at 52, to electrical lead wires (not shown) which extend outwardly from the end plate 22 to a source of electrical power for initiating ignition of the inflator 10.

Contained within the igniter tube 30 between the clips 34 and 38 is a suitable pyrotechnic material illustrated at 58 which may be any of a variety of compositions meeting the requirements for rapid ignition and non-toxicity. A typical material for this use may be a granular mixture of 25% by weight of boron and 75% of potassium nitrate. This pyrotechnic material 58 is ignitable by the fuse 33.

The igniter tube 30 includes a plurality of perforations illustrated at 60 for the release of ignition gases from combustion of the pyrotechnic material 58 into the elongate combustion chamber 18. A this layer of aluminum foil 62 or other suitable rupturable material surrounds the perforated igniter tube 30 to maintain the integrity of the pyrotechnic material 58 inside of the igniter tube 30 until ignition at which time the pressure of ignition, after the pressure in the igniter tube 30 has been built up to a suitable levels will rupture the foil 62 to allow ignition gases into the combustion chamber 18 to ignite combustible gas generant material which is contained therein, as discussed in greater detail hereinafter.

The combustion chamber 18 is enclosed over the length thereof by a perforated tube or basket 64 composed of mild steel or other suitable material. Basket 64 is located concentrically relative to the igniter tube 30 and the housing tubular portion 14 by means of crimps 46 and 48 in the retaining member 26 and locater member 44, respectively. Gases are led from the combustion chamber 18 through perforations 66 in the perforated basket 64 into a space between the perforated basket 64 and the wall of the tubular portion 14 of the housing 12, which space contains a gas filtering assembly generally illustrated at 68. The gas filtering assembly 68 is generally annular in cross section and may include, for example, beginning with the innermost layer next to the basket 64, two wraps of nickel coated carbon or stainless steel 30 mesh screen, then metal filter such as 80 x 700 or 50 x 250 mesh stainless steel or 40 x 180 mesh nickel coated carbon, then a single wrap of ceramic filter paper 0.080 inches thick, followed by two wraps of 30 mesh stainless steel or nickel coated carbon. Lastly, a wrap 54 of 5 mesh stainless steel or nickel coated carbon may be provided adjacent the tubular portion 14 to allow space around the apertures 70 therein for the free passge of generated gases. However, in accordance with the present invention, the filtering assembly 68 may contain any other suitable arrangement of filtering components other than that described. Adjacent the inner wall of perforated basket 64 within the combustion chamber 18 may be disposed two or three wraps of 30 mesh nickel plated carbon or stainless steel cooling screen 56 or other suitable cooling screen.

Suitably spaced over the length of the chamber 18 and over a portion of the housing 12 circumferentially is a plurality of apertures 70 for release of generated gas from the combustion chamber 18 into a gas bag (not shown) which is suitably attached thereto. Covering the inside wall of the tubular portion 14 of housing 12 to provide an hermetic or environmental seal is a layer of aluminum foil 72 of other suitable material suitably adhesively applied such as with a thermosetting adhesive and which is rupturable by the gases generated in the combustion chamber 18. The apertures 70 may be positioned over a little less than one-half of the surface circumferentially of the housing 12.

Disposed within the combustion chamber 18, in annular cross section, is a gas generating charge of solid pyrotechnic material comprising a plurality of pellets 74 of gas generant material such as shown in the aforesaid U.S. Patent No. 4,547,342 to Adams et al. One or more suitable screens 76 such as 40 mesh carbon screen may be positioned radially in the chamber 18 to compartmentalize the pellets 74 so that they do not stack and create void spots and so that they do not grind themselves to pieces during vibrations. The generating material may be one of any number of compositions meeting the requirements of burning rate, non-toxicity, and flame temperature. One composition which may be utilized is that described in U.S. Patent No. 4,203,787 to Schneiter et al. Another composition which may advantageously be utilized is that described in U.S. Patent No. 4,369,079 to Shaw. Both of these patents, the disclosures of which are incorporated herein by reference, are assigned to the assignee of the present invention.

It should be understood that the present invention is not limited to any particular composition or physical shape of the gas generant. For example, the gas generant may be composed of a plurality of wafers of combustible gas generating material which are arranged in a side by side array and spaced apart from each other. The wafers may have the shape of washers whose inner and outer diameters are generally the same as the inner and outer diameters respectively of the combustion chamber 18, i.e., they have substantially the same shape as the cross-sectional shape of the combustion chamber 18 taken in a radial plane. The igniter tube 30 may pass through the central core of the wafers. The wafers may typically have a thickness of 0.20 inches, an outer diameter typically of 1.3 to 2.0 inches, and a central hole diameter typically of 0.25 to 0.50 inches which is substantially equal to (but slightly larger than) the outer diameter of the igniter tube 30 whereby the wafers extend from the igniter tube 30 radially outwardly to efficiently fill the combustion chamber 18. The wafers may be stacked to provide a volumetric loading density preferably in the range from 65% to 80% or higher. A plurality of meshed compressible cushion members may be disposed in alternatiang relation between the wafers and compressed between the wafers. Like the wafers, these cushion members may have a central core to allow installation of the igniter tube 30 and have outer and inner diameters approximately equal to the outer and inner diameters respectively of the wafers. The cushion members may be formed from a screen or other suitable meshed material, for example, 20 to 50 mesh wire screen. The screens may be pressed into a wave form to provide a screen or cushion effect.

The thickness of a formed screen cushion member may be perhaps from about 1.5 to 5 times the thickness of the unpressed screen. The array of alternating wafers and cushion members is compressed and held in the combustion chamber 18 by retaining ring 26 or other suitable retainer member to structurally suspend each individual wafer between compressed adjacent cushion members.

Referring to Figs. 2 and 3, in order to eliminate the possibility of hot gases blowing by the bulkhead from the first combustion chamber 18 or pulse and igniting the second pulse, i.e., gas generant material in the second chamber 20, prematurely, the bulkhead portion 16 is manufactured, in accordance with the present invention, so that it is integral with the tubular portion 14 to thereby isolate the chambers 18 and 20 from each other.

In order to minimize the manufacturing cost of the housing 12 so that the inflator 10 may be manufactured less expensively than if two single chamber inflators were manufactured and placed side-by-side or end-to-end to inflate a gas bag, in accordance with the present invention the housing 12 is extruded by use of a double ram in a process commonly known to those of ordinary skill in the art to which this invention pertains. The housing is extruded by impact extrusion. However, the blank is sufficiently hot to allow easy flowability of the material when extruded but not as hot as in the normal hot extrusion process.

In order to minimize the weight of the inflator 10, the housing 12 and end plates or base members 22 are composed preferably of aluminum. The extrusion process allows the bulkhead portion 16 to be integral with the tubular portion 14 so that upon ignition of the pyrotechnic material in combustion chamber 18 hot gases cannot blow by the bulkhead 16 and inadvertently prematurely ignite the pyrotechnic material in combustion chamber 20. In addition, since the dual chamber housing 12 is substantially as economical to produce as a single chamber housing, the dual chamber inflator 10 may be produced more economically than two single chamber inflators.

In accordance with another aspect of this invention, the housing 12 may be extruded to a greater length than necessary so that the length of each of the chambers 18 and 20 may be tailored for a specific application by cutting each end to size after the housing 12 is extruded. This allows tailoring of the sizes of the chambers 18 and 20 so that one is longer than the other. As shown in Fig. 2, chamber 18 has a length, illustrated at 80, which may be 3.6 inches which may be shorter than the length, illustrated at 82, of chamber 20 which may be 7.2 inches. The shorter chamber 18 may be fired first for enhanced softness of initial inflation.

The combustion chambers 18 and 20 may, if desired, be provided with different gas generants, for example, the shorter combustion chamber 18 may be provided with a plurality of alternating wafers and screens, as previously described, for a softer onset of inflation of the inflatable gas bag, and the longer chamber 20 may be provided with a plurality of pellets of gas generant material, as shown at 74 in Fig. 1, to therefter rapidly achieve full inflation.

The bulkhead portion 16 is solid or imperforate, i.e., it has no perforations or means in it which would allow the blowing of gases from one chamber into the other.

Functioning of the inflator 10 for each combustion chamber begins with an electrical signal from a crash sensor (not shown) through lead wires to the terminals 52 of the initiator or squib 50. The initiator 50 initiates burning of the fuse 33 which in turn effects combustion of the pyrotechnic material 58. The gases from burning of the pyrotechnic material 58 burst through the perforations 60 in the igniter tube 30 and the aluminum foil 62 to ignite the plurality of pellets 74 or other gas generant in the combustion chamber. The burning of the pellets 74 releases inflation gases which flow through the cooling screen, which cools and removes some particulate residue therefrom, and then leave the combustion chamber through the perforations 66 in the perforated basket 64. The inflator gases then flow through the filter pack 68 which cools and removes particulate residue therefrom, then burst through the aluminum foil 72, and exit the inflator through apertures 70 in the tubular portion 14 of the housing 12 to enter a gas bag (not shown).

Referring to Fig. 4, there is shown at 90 a graph of a typical single pulse passenger inflator. The pressure rise thereof to full inflation, which is illustrated at 92, is shown to occur at a pressure of around 35 psi at about 50 milliseconds. For such an inflator, it should be noted that after only 20 milliseconds it will have achieved a pressure of about 10 psi. In order to slow such a rapid initial pressure rise to avoid injuries to small children and out-of-position occupants during air bag deployment while still achieving full inflation after about 50 milliseconds, the dual chamber inflator 10 of the present invention is provided wherein the first combustion chamber 18 is initially fired, and, after a predetermined time interval, the second combustion chamber 20 is fired. In Fig. 4, 94 represents the pressure rise during the time interval before the second combustion chamber is fired wherein the pressure rises to a pressure of only about 4 psi in about 19 milliseconds to provide, as graphically illustrated in Fig. 4, a slower onset of inflation. After this 19 millisecond interval, the second combustion chamber 20 is also fired as illustrated at 96 after which the pressure rises due to the output of both combustion chambers 18 and 20 as illustrated at 98 to also achieve full inflation after about 50 milliseconds.

The dual chamber inflator 10 offers a wide range of performance variation. By combining the dual chamber inflator 10 with the microprocessor in an automobile, extremely flexible inflator performance may be achieved. Thus, some of the common input parameters monitored by microprocessors in automobiles such as vehicle speed and temperature can be used to determine the correct time delay in firing the combustion chambers 18 and 20. This offers a flexible inflator performance output which is tailorable to the specific needs of the automobile at the time of a crash. This flexibility in performance output may be enhanced by the relative ease of varying the lengths 80 and 82 of the chambers 18 and 20, respectively, and by the use of different compositions of configurations of gas generant material in each of the chambers 18 and 20. Performance flexibility may also be provided by the dual chamber inflator 10 since the time delay between firing each chamber may be made temperature sensitive, i.e., the time delay may be shortened as the ambient temperature decreases.

Fig. 5 is a schematic diagram that illustrates the utilization of a microprocessor provided in an automobile to determine the correct time delay between firing each of the chambers 18 and 20 of an inflator 10 for a desired optimum inflator performance. As shown, a suitable microprocessor, indicated by reference numeral 100, has a plurality of input and output terminals 102 and 104, respectively, some of which are dedicated to the dual pulse inflator 10. Connected to individually associated input terminals 102 of the microprocessor 100 are a crash sensor 106, a speed sensor 108, and an ambient temperature sensor 110. Other variables, such, for example, as the weight of the occupant or occupants, may also be sensed and connected to an input 102 of the microprocessor. One output terminal lu4 of the microprocessor 100 is connected to the squib 50 that is associated with chamber 18 of inflator 10 while another output terminal 104 thereof is connected to the squib 50 associated with chamber 20 of the inflator.

The microprocessor 100, as mentioned previously, may comprise that which already is present in the automobile or other vehicle and is provided for monitoring parameters related to the performance of the vehicle. The inflator 10 is suitably mounted on or adjacent to the dashboard of the vehicle in a manner known to those skilled in the art. An inflatable passenger air bag or other confinement, schematically illustrated in Fig. 5 and indicated by the reference numeral 112, is appropriately folded and physically supported, when in collapsed condition, in a manner known to those skilled in the art, so as to properly deploy upon activation of the inflator 10 to provide the desired passenger restraining function.

In accordance with the invention, the microprocessor continually monitors the various functions mentioned and determines a correct time delay between initiation of combustion in chambers 18 and 20 for optimum performance of the inflator 10. Inasmuch as the details per se of the microprocessor 100 and the several sensors 102, 104 and 106 form no part of the present invention and are known to those skilled in the art, they will not further be described herein.

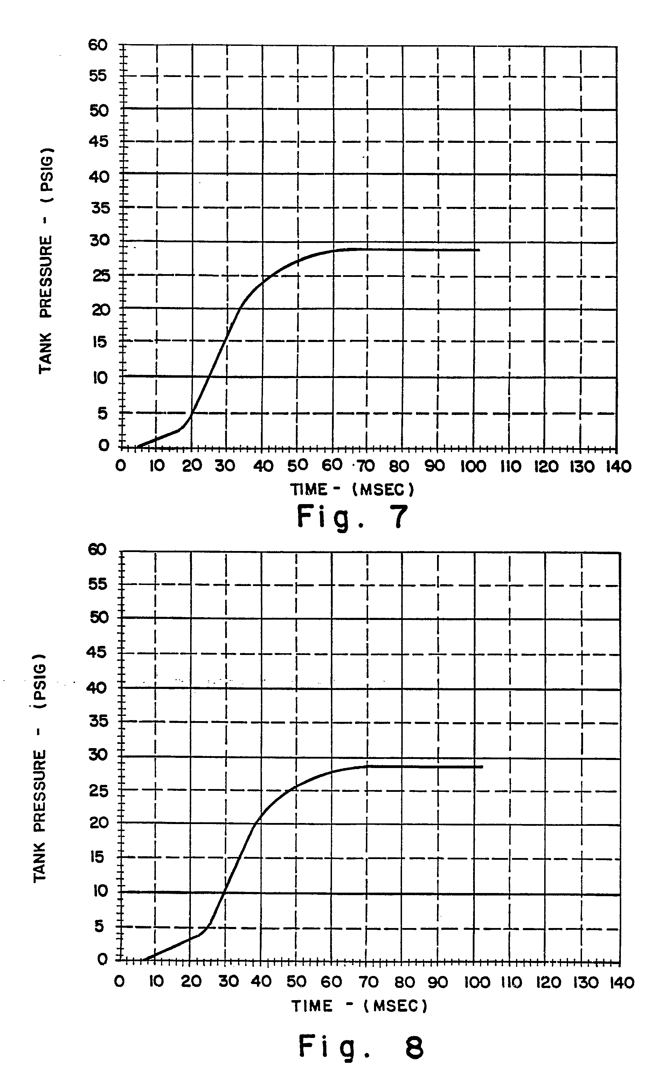

Figs. 6, 7 and 8 graphically illustrate the performance of the inflator 10 according to the invention with time delays of 10 milliseconds, 15 milliseconds and 20 milliseconds, respectively, between the initiation of combustion in chamber 18 and the initiation of combustion in chamber 20. The result of increasing the time delay between the initiation of combustion in the two chambers 18 and 20, as may be seen by a comparison of the graphs of Figs. 6, 7 and 8, is to reduce the rate at which the inflator pressure rises initially, with the pressure at the end of about 60 seconds being approximately the same in each case. Thus, as seen in Fig. 6, with a time delay of 10 milliseconds, the inflator pressure is about 9 psig (pounds per square inch gauge) at the end of 20 milliseconds. With a time delay of 15 milliseconds, as seen in Fig. 7, the inflator pressure at the end of 20 milliseconds is 5 psig. As seen in Fig. 8, with a time delay of 20 milliseconds, the inflator pressure is about 3-1/2 psig at the end of 20 milliseconds.

Thus, in accordance with the invention, there has been provided an improved dual chamber air bag inflator. There has also been provided an improved inflator system including a dual chamber air bag inflator of the radial type having particular utility for use on the passenger side of an automobile or other vehicle, which system is capable of providing a controlled delivery of gas to a protective air bag in accordance with the speed and ambient temperature at the time of a crash.

## Claims

1. A gas generator (10) for inflating a vehicle inflatable restraint cushion (112), comprising an elongate extruded housing (12) including a tubular portion (14) and at least one radially extending imperforate bulkhead portion (16) integral with said tubular portion to provide at least two isolated gas generation chambers (18,20) in said housing, a pair of end portions on said tubular portion, means (22) for closing said end portions, means in each of said chambers for generating gas for inflating a vehicle inflatable restraint cushion, and apertures (70) in said tubular portion for directing generated gas from each of said chambers to a vehicle inflatable restraint cushion.

2. A gas generator according to Claim 1 wherein the bulkhead portion (16) is disposed at a position along the length of said tubular portion (14) such that one of said chambers (20) is longer than another of said chambers (18).

3. A gas generator according to claim 1 or Claim 2, which is a passenger side inflatable restraint cushion inflator.

4. A gas generator according to any preceding claim wherein said housing (12) is composed of aluminum.

5. A gas generator according to any preceding claim wherein said gas generating means comprises an independent igniter (30,33,58) for each of said chambers (18,20).

6. A gas generator according to any preceding claim wherein said end portion closing means comprises a plate member (22) inertia welded to said respective end portion.

7. A method for inflating a vehicle inflatable restraint cushion (112) comprising the steps of:

(a) providing in a single housing (12) at least two gas generating chambers (18,20) which are separated from each other by an imperforate bulkhead portion (16) which is integral with a tubular portion (14) of the housing:

(b) igniting gas generant (74) in one of the chambers (18):

(c) after a predetermined time interval after ignition of the gas generant in said one of the chambers, igniting gas generant in another of the chambers (20).

8. A method according to Claim 7 wherein the housing (12) is an extruded housing.

9. A method according to claim 7 or claim 8, wherein the position of the bulkhead portion (16) along the length of the tubular portion (14) is such that one of the chambers (20) is longer than another of the chambers (18).

10. A method according to any one of claims 7 to 9 wherein the restraint cushion (112) is a passenger side restraint cushion.

11. An inflator comprising:
a single impact extruded elongated housing (12) having a bulkhead (16) formed therein integrally therewith at an intermediate position along the length thereof, and
a pyrotechnic gas generator contained within said housing comprised of first and second elongated gas-generating charges of solid pyrotechnic material (74) extending in end-to-end relation therein with one of said charges positioned on one side of said bulkhead and the other charge positioned on the other side thereof.

12. An inflator according to claim 11 wherein said housing (12) includes a first end and a second end with said bulkhead (16) and said first and second ends forming first and second chambers (18,20) respectively, in said housing, and further including,
an igniter tube (30) and initiator (50) assembly individual to each of said charges of solid pyrotechnic material for initiating functioning thereof, with one igniter tube and initiator assembly and the charge of solid pyrotechnic material associated therewith being positioned in said first chamber (18) and the other igniter tube and initiator assembly and the charge of solid pyrotechnic material associated therewith being positioned in said second chamber (20).

13. An inflator according to claim 12 wherein each igniter assembly (30,50) is positioned in said housing (12) in concentric relation with the associated charge of pyrotechnic material.

14. An inflator according to claim 12 or claim 13 further including,
a first base member (22), and
a second base member (22),
said first and second base members being inertia welded in sealing relation to the first and second ends, respectively, of said housing, with one of said initiator assemblies (50) being mounted in said first base member and the other one of said initiator assemblies (50) being mounted in the second base member.

15. An inflator according to claim 11 wherein said housing (12) has a cylindrical wall (14) ano has a first end and a second end with said wall between said first and said second ends and said bulkhead being perforated, and further including,
an inner perforated cylindrical tube (64) individual to and containing an associated one of said charges of pyrotechnic material (74),
each of the charges of pyrotechnic material being positioned with an associated igniter tube (30) and in the associated inner cylindrical tube (64) in concentric relation therein with the cross section of each charge of pyrotechnic material being annular,
an initiator assembly (50) individual to each of said igniter tubes (30) for initiating functioning thereof,
a first base member (22), and
a second base member (22)
said first and second base members (22) being inertia welded in sealing relation to the first and second ends, respectively, of said housing, with one of said initiator assemblies being mounted in said first base member and the other one of said initiator assemblies being mounted in said second base member.

16. An inflator according to claim 15 further including, in association with each said charge of pyrotechnic material (74) a foil seal (72) for sealing the inner wall of said housing on the side of the bulkhead in which each said charge of pyrotechnic material is positioned, and further including,
an annular filter (68) positioned in concentric relation between each of said foil seals (72) and the associated inner perforated cylindrical tube (64).

17. An inflator according to claim 15 or claim 16 wherein said bulkhead forms first and second chambers (18,20) therebetween and said first and second ends of said housing, and further including,
a retainer disk (26) individual to and positioned in an associated one of said chambers adjacent the first and second end, respectively, of said housing, and
a locator cap (44) individual to and positioned in an associated one of said chambers adjacent said bulkhead(16),
each of said retainer disks and locator caps being configured to provide a cup portion (31,32) and a circular flange (46,48) for facilitating the assembly in each of said chambers of said inner perforated cylindrical tube (64) and said igniter tube (30) respectively, in concentric relation and for the retention thereof against radial movement.

18. An inflator according to any one of claims 12 to 17 further including an auto ignition device (36) associated with each of said igniter tubes (30) for effecting functioning thereof when said inflator is exposed to an abnormal high temperature environment, with each of said auto ignition devices being positioned between said bulkhead and an end of the associated igniter tube.

19. A dual chamber housing (12) for inflating large passenger side occupant restraint air bags (112) comprising,
a single impact extruded elongated tube (14) having a bulkhead (16) formed therein integrally with said tube at a position intermediate the length thereof.

20. A vehicle safety system for restraining movement of a passenger in the vehicle upon the occurrence of a collision condition, comprising:
a passenger restraining member (112) movable between a collapsed inoperative position and a deployed position,
deployment means operatively associated with the passenger restraining member for moving said member out of its collapsed position towards its deployed position, said deployment means comprising,
a single impact extruded elongated perforated housing (10) having first and second ends and having a bulkhead (16) integrally formed therein intermediate said first and second ends, said bulkhead forming in said housing first and second chambers (18,20) therebetween and said first and second ends, respectively,

a pyrotechnic gas generator contained within said housing comprised of first and second gas generating charges of solid pyrotechnic material (74) positioned in said first and second chambers, respectively,
an igniter tube and initiator assembly (30,50) individual to each of said charges of solid pyrotechnic material for initiating functioning thereof with one igniter tube and initiator assembly and the charge of solid pyrotechnic material associated therewith being positioned in said first chamber (18) and the other igniter tube and initiator assembly and the charge of pyrotechnic material associated therewith being positioned in said second chamber (20).

a microprocessor (100) having a plurality of input means (102) and a plurality of output means (104) said microprocessor being operative to monitor substantially simultaneously a plurality of parameters applied to said input means, said parameters including ambient temperature, vehicle speed, and an incipient collision,
sensing means connected to the input means of said microprocessor, said sensing means including means responsive to an incipient crash (106), ambient temperature (108), and vehicle speed (110) and
means connecting the output means of said microprocessor to said initiator assemblies (50) of said inflator, said microprocessor operating responsively to said input sensing means upon the sensing of an incipient crash of said vehicle to initiate operation of one of said initiator assemblies with initiation of the other one of said assemblies being delayed for an interval of duration determined by said microprocessor in accordance with the ambient temperature and vehicle speed thereby to actuate said passenger restraining member (112) to the deployed position thereof by providing a controlled delivery of generated gas thereto at a pressure rise rate that is tailorable to the specific needs of the vehicle at the time of a crash thereby to preclude possible injury to an out-of-position passenger in the vehicle.

21. A vehicle safety system according to claim 20, wherein the pressure rise rate in the delivery of generated gas to said passenger restraining member (112) initially is depressed.

22. A vehicle safety system according to claim 20 or claim 21 wherein said pyrotechnic gas generator is as claimed in any one of claims 1 to 6 or claims 11 to 18.

Fig. 1

Fig. 3

EP 0 382 552 A2

Fig. 2

FIG.5

Fig. 4

Fig. 6

EP 0 382 552 A2

Fig. 7

Fig. 8